Europäisches Patentamt

European Patent Office

Office européen des brevets

(19)

(11) Veröffentlichungsnummer : **0 416 368 B1**

## (12) EUROPÄISCHE PATENTSCHRIFT

(45) Veröffentlichungstag der Patentschrift :
**28.06.95 Patentblatt 95/26**

(51) Int. Cl.⁶ : **G05B 13/04**

(21) Anmeldenummer : **90116001.0**

(22) Anmeldetag : **21.08.90**

---

(54) **Adaptiver Regler.**

---

(30) Priorität : **06.09.89 DE 3929615**

(43) Veröffentlichungstag der Anmeldung :
**13.03.91 Patentblatt 91/11**

(45) Bekanntmachung des Hinweises auf die
Patenterteilung :
**28.06.95 Patentblatt 95/26**

(84) Benannte Vertragsstaaten :
**AT CH DE FR GB LI**

(56) Entgegenhaltungen :
**EP-A- 0 292 749**
**DE-A- 3 225 811**

(56) Entgegenhaltungen :
**AUTOMATISIERUNGSTECHNISCHE PRAXIS -**
**ATP. vol. 31, no. 2, Februar 1989, MÜNCHEN**
**DE Seiten 53 - 57; P. GRIES: "ERFAHRUNGEN**
**MIT EINEM INBETRIEBSETZUNGSGERÄT AN**
**EINER CHEMIEANLAGE"**

(73) Patentinhaber : **SIEMENS**
**AKTIENGESELLSCHAFT**
**Wittelsbacherplatz 2**
**D-80333 München (DE)**

(72) Erfinder : **Linzenkirchner, Edmund, Dipl.-Ing.**
**Mozartstrasse 4 H**
**D-7514 Eggenstein (DE)**
Erfinder : **Preuss, Peter, Dr.**
**Wattkopfstrasse 68**
**D-7500 Karlsruhe 21 (DE)**

**Beschreibung**

Die Erfindung betrifft ein adaptives Regelverfahren gemäß dem Oberbegriff des Anspruchs 1.

In der DE-OS 37 17 555 bzw. EP-A- 0 292 749 ist ein Verfahren zum Bestimmen der Parameter einer Regelstrecke beschrieben, von der angenommen ist, daß sie sich wie ein Verzögerungsglied n-ter Ordnung mit gleichen Zeitkonstanten verhält. Zum Bestimmen der Parameter wird der Regelkreis aufgetrennt und ein Sprungsignal auf die Regelstrecke und ein mathematisches Streckenmodell geschaltet. Durch Vergleich der gemessenen Antwort der Regelstrecke mit den vom Modell mit unterschiedlichen Parametern berechneten Werten werden die Parameter bestimmt, bei denen die Abweichung von Modell und Strecke am geringsten ist. Aus diesen Parametern können die eines Reglers bestimmt werden, die dann in diesen Regler eingegeben werden. In der genannten Offenlegungsschrift sind besondere Maßnahmen angegeben, wie die Ausgangswerte der Regelstrecke, insbesondere die Anfangs- und Endwerte, unabhängig von der Zeitkonstante, vorteilhaft bestimmt werden.

Aus der Zeitschrift "ATP Automatisierungstechnische Praxis" 31 (1989), Heft 2, Seiten 53 bis 57 ist ein Inbetriebsetzungsgerät bekannt, in dem das oben beschriebene bekannte Verfahren angewandt ist. Nach dem Anschluß der Regelgröße und der Stellgröße an die Eingänge des Inbetriebsetzungsgerätes wird der in Betrieb zu setzende Regler auf Handbetrieb beschaltet, d. h., es wird der Regelkreis aufgetrennt, die Regelstrecke mit einem Stellgrößensprung angeregt und der zeitliche Verlauf der Regelgröße und der Stellgröße erfaßt. Danach wird durch eine Parameteroptimierung ein Streckenmodell in der Form eines Verzögerungsgliedes n-ter Ordnung mit gleichen Zeitkonstanten ermittelt, indem die Differenzen zwischen Modell- und Strecken-Sprungantwort minimiert werden. Entsprechend den Parametern dieses Streckenmodells wird der Regler nach der Methode des Betragsoptimums eingestellt. Das Verhalten des geschlossenen Regelkreises kann als Modell überprüft werden, ohne Versuche mit dem realen Regelkreis durchführen zu müssen.

Der vorliegenden Erfindung liegt die Aufgabe zugrunde, ein adaptives Regelverfahren zu schaffen, das auch bei geschlossenem Regelkreis die Regelstrecke automatisch identifiziert und die Regelparameter optimiert. Eine Streckenidentifikation und eine Optimierung der Reglerparameter soll auch dann möglich sein, wenn sich der Regler im sogenannten Handbetrieb befindet.

Erfindungsgemäß wird diese Aufgabe mit den im kennzeichnenden Teil des Anspruchs 1 angegebenen Maßnahmen gelöst.

Die Adaptionsvorgänge können somit durch Verstellen des Sollwertes gestartet werden, aber nur dann, wenn sich der Regler zuvor in einem stationären Zustand befand.

Dieser kann dadurch festgestellt werden, daß sich die Regeldifferenz oder der Sollwert bzw. im Falle des Handbetriebs die Regelgröße während einer bestimmten Zeit um nicht mehr als einen vorgegebenen Betrag geändert hat. Stellgröße und Regelgröße werden dann paarweise gemessen und gespeichert, so daß sie für nachfolgende Rechenoperationen, mit denen mit dem Modell die Streckenparameter gefunden werden, beliebig lange zur Verfügung stehen.

Anhand der Zeichnungen werden im folgenden die Erfindung sowie Ausgestaltungen, Weiterbildungen und Vorteile näher beschrieben und erläutert.

Figur 1       zeigt das Prinzipschaltbild eines adaptiven PID-Reglers.

In Figur 2       ist das Auffinden der Parameter der Regelstrecke veranschaulicht.

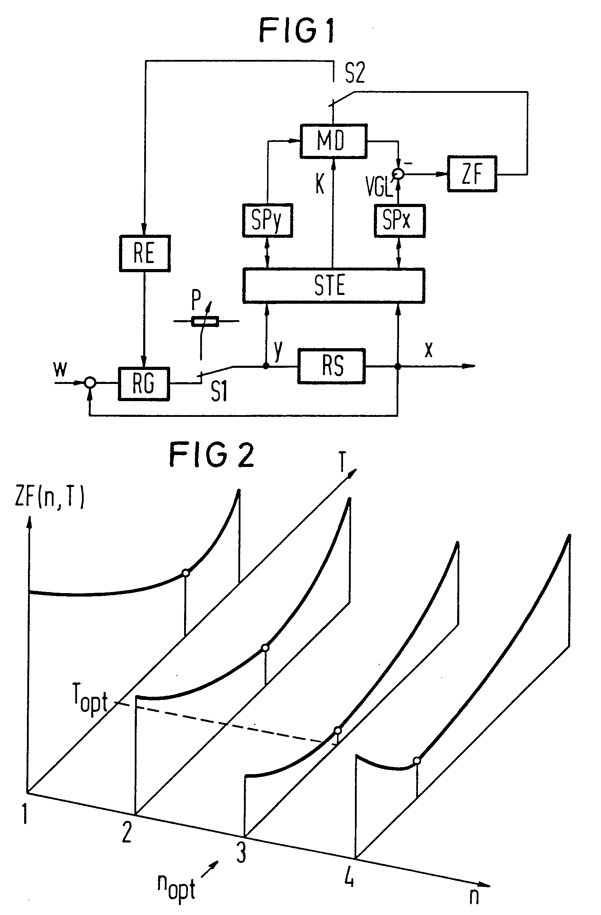

In Figur 1 ist mit RS eine Regelstrecke eines Prozesses bezeichnet, von der angenommen ist, daß sie ähnlich einem Verzögerungsglied n-ter Ordnung mit gleichen Zeitkonstanten wirkt. Zeitkonstante, Ordnungszahl und Prozeßverstärkung können sich ändern, sind daher nicht bekannt und sollen experimentell ermittelt werden. Ein PID-Regler RG soll stets an die Strecke angepaßt werden.

Die Identifikation der Regelstrecke als Grundlage der Reglerneuberechnung wird im allgemeinen nur bei von außen gewollt ausgelösten Sollwert- oder Handwertverstellungen gestartet. Ein Schalter S1 schließt in der in Figur 1 dargestellten Stellung die Regelstrecke RS an den Regler RG an, so daß die Regelung im Automatikbetrieb arbeitet. In der anderen Stellung ist die Regelstrecke RS vom Regler RG abgetrennt und an ein Stellelement, im Ausführungsbeispiel ein Potentiometer P, für den Handbetrieb angeschlossen. Ausgewertet wird dann das sogenannte Führungsverhalten des Regelkreises. Eine solche Auswertung hat gegenüber der Auswertung des Störverhaltens, bei der Veränderungen der Regelstrecke die Adaptionsvorgänge auslösen, den Vorteil, daß Eingriffsort, Startzeitpunkt und zeitlicher Verlauf der Anregung bekannt sind. Damit ist es möglich, eine auf numerischer Simulation beruhende Optimierung durchzuführen. Der Zeitpunkt des Beginns der abzuspeichernden Werte y, x von Stell- und Regelgröße sowie die Größe der Verstellung des Sollwertes w sind in einem adaptiven Regler problemlos zu ermitteln, da es hierzu nur der zyklischen Abfrage derjenigen Speicherzelle bedarf, welche den aktuellen Sollwert enthält.

Zweckmäßig wird zur Identifikation der Regelstrecke deren Verhalten zwischen zwei eingeschwungenen Zuständen beobachtet. Das Kriterium für einen stationären Zustand muß sorgfältig ausgewählt werden, da man bei einem zu strengen Kriterium Gefahr läuft, die durch Sollwert- oder Handwertverstellung ausgelöste Adaptionsanforderung zu oft zu ignorieren, andererseits erhöht ein zu weit formuliertes Kriterium das Risiko einer fehlerhaften Identifikation. Im Ausführungsbeispiel ist die Bedingung für den eingeschwungenen Zustand, daß im Automatikbetrieb der Mittelwert der Regelgröße innerhalb einer vorgegebenen Zeit um nicht mehr als einen bestimmten Betrag vom Sollwert abweichen darf. Im Handbetrieb darf die Regelgröße innerhalb einer vorgegebenen Zeit sich um maximal einen bestimmten Betrag ändern. Anders ausgedrückt: Im Automatikbetrieb muß der Mittelwert einer bestimmten Anzahl von Werten der Regelgröße in einem Streifen vorgegebener Breite um den Sollwert liegen. Im Handbetrieb muß eine bestimmte Anzahl von Werten der Regelgröße in einem Streifen vorgegebener Breite liegen.

Um im Automatikbetrieb eine bessere Anpassung an die tatsächliche Prozeßdynamik zu erzielen, wird bei Vorliegen von Vergangenheitswerten der Parameter des Prozeßmodells ein Sollwertstreifen in der Weise überwacht, daß ein Zähler bei jedem innerhalb des Sollwertstreifens liegenden Abtastwert inkrementiert wird, jedoch auf Null zurückgesetzt wird, sobald ein Abtastwert außerhalb des Streifens auftritt. Der Verlauf der Regelgröße wird als stationär angesehen, wenn sie während mindestens einer Zeit, die etwa gleich einem Fünftel der Einschwingzeit des Prozeßmodelles ist, um nicht mehr als den vorgegebenen Betrag vom Sollwert abweicht. Im Falle eines sogenannten $PT_n$-Modelles ist diese Zeit etwa $(0,4 \, n + 0,6) \cdot T$. Wird die Regelgröße mit der Abtastzeit $T_a$ abgetastet und werden die Abtastungen gezählt, bei denen die Regelgröße innerhalb des vorgegebenen Sollwertstreifens liegt, so gilt die Regelgröße als stationär, wenn der Zählerstand mindestens $(0,4 \, n + 0,6) \cdot T / T_a$ ist. Dieses Kriterium ist allerdings für die erstmalige Adaption bzw. für die Inbetriebsetzung nur eingeschränkt anwendbar.

Ein Adaptionsvorgang wird gestartet, wenn, ausgehend von einem stationären Zustand der Regelgröße, sich der Sollwert um mehr als einen vorgegebenen Betrag ändert. Damit im Automatikbetrieb auch nichtsprungförmige Sollwertverstellungen erkannt werden, werden die Sollwertänderungen aufsummiert. Im Handbetrieb genügt die Überwachung der Stellwertverstellung. Ergibt die Summe der Änderung der Sollwertverstellungen einen Wert, der dem Betrage nach größer als ein vorgegebener Wert ist, oder ist die Stellwertverstellung im Handbetrieb größer als dieser Wert, wird die Identifikation der Regelstrecke gestartet, sofern zuvor ein stationärer Betriebszustand bestanden hat.

Für die Identifikation werden zunächst, von einer Steuerung STE gesteuert, Regel- und Stellgröße abgetastet und als Wertepaare in je einen Speicher SPx, SPy gespeichert. Ein hierzu besonders geeignetes Verfahren ist in der DE-OS 37 21 184 beschrieben. Das Abspeichern wird beendet, wenn ein stationärer Endzustand erreicht ist. Dieser kann wie der stationäre Anfangszustand bestimmt werden, jedoch ist die sichere Erkennung des Endwertes einer Übergangsfunktion, vor allem bei störungsbehafteten Meßwerten, sehr schwierig. Ein zu frühes Ansprechen des Endekriteriums führt zumindest zu einem falschen Wert der Prozeßverstärkung. Bei sehr später Erkennung besteht die Gefahr, daß Störungen den Endwert verfälschen und daß der eigentliche Einschwingvorgang nur noch einen unwesentlichen Teil der abgespeicherten Übergangsfunktion ausmacht.

Im Automatikbetrieb kann der Endwert mit ausreichender Sicherheit dadurch bestimmt werden, daß für jeden neuen Wert der Regelgröße die Abweichung vom Sollwert überprüft wird. Gilt für eine vorgegebene Anzahl von Werten der Regelgröße die Bedingung

$$\mid w - x_m \mid \; \leq \; c \mid w - x_l \mid \quad (c < 0,1),$$

ist das Endekriterium erfüllt und die Abspeicherung wird beendet. Vorteilhaft werden nicht einzelne Regeldifferenzen für das Endekriterium herangezogen, sondern es werden vorteilhaft Mittelwerte $x_m$ gebildet, z. B. aus vier aufeinanderfolgenden Werten. Treten am Ende des Einschwingvorganges gedämpfte Schwingungen mit Werten außerhalb des mit dem oben angegebenen Kriterium bestimmten Sollwertstreifens auf, kann es lange dauern, bis das Endekriterium erfüllt ist. Um dies zu vermeiden, kann man das Endekriterium dahin erweitern, daß nach einer bestimmten Anzahl von Vorzeichenwechseln der Regeldifferenz der Speichervorgang abgebrochen wird, wenn zwischen den beiden letzten oder mehr Vorzeichenwechseln das oben angegebene Endekriterium erfüllt ist.

Im Handbetrieb ist nicht wie im Automatikbetrieb der Endwert vorab bekannt. Es muß daher im Grunde nach jeder Abspeicherung eines neuen Wertes der komplette bisherige Verlauf ausgewertet werden. Da dies einen erheblichen Aufwand bedeuten würde, wird gemäß einer Weiterbildung der Erfindung für jeden Abtastwert $x_k$ der Abtastwert $x_j$ bestimmt, der von allen Abtastwerten zum erstenmal den Wert $x_k - c \mid x_k - x_l \mid$ überschritten hat. Das Abspeichern wird beendet, wenn $k > a \cdot j$ ist, wobei $a > l$ ist. Der Faktor $c$ ist kleiner 0,1, vorzugsweise 0,05. $a$ war in einem Ausführungsbeispiel gleich 2.

Ergänzend zu den angegebenen Kriterien kann parallel zur Abspeicherung der betragsgrößte Wert der Differenz zwischen dem Anfangswert und dem jeweiligen Wert der Regelgröße ermittelt werden. Damit kann nach Vorliegen der kompletten Übergangsfunktion rasch die relative Überschwingweite der Regelgröße berechnet werden, um festzustellen, ob die Strecke hinreichend aperiodisch und damit entsprechend dem angenommenen Modell einschwingt oder nicht. Bei einem Überschwingen von mehr als einem vorgegebenen Betrag, z. B. 30 %, kann zweckmäßig auf eine Auswertung der Meßwerte verzichtet und die Adaption abgebrochen werden. Damit bei zu kleiner Änderung der Regelgröße die Abspeicherung nicht endlos weiterläuft, erfolgt ein Sicherheitsabbruch der gesamten Adaption nach einer Wartezeit von z. B. etwa der fünffachen Zeitkonstante, sofern schon die Zeitkonstante in einem früheren Adaptionsvorgang ermittelt wurde. Andernfalls muß eine bestimmte Zeit vorgegeben werden.

Von der Regelstrecke wird angenommen, daß sie sich wie ein Verzögerungsglied n-ter Ordnung mit gleichen Zeitkonstanten verhält. Demgemäß wird als mathematisches Modell MD ein solches Verzögerungsglied gewählt. Die Streckenverstärkung K kann die Steuerung STE in einfacher Weise aus den Anfangs- und Endwerten berechnen, indem das Verhältnis der Differenz zwischen Anfangs- und Endwert der Regelgröße zur Differenz von Anfangs- und Endwert der Stellgröße gebildet wird. Die so ermittelte Verstärkung K wird in das Modell MD eingegeben. Die Parameter Zeitkonstante T und Ordnung n werden dadurch ermittelt, daß die zu jedem Stellgrößenwert gehörenden gemessenen und berechneten Werte der Regelgröße in einem Vergleicher VGL miteinander verglichen werden, z. B. durch Differenzbildung, und in einer Einheit ZF die Summe der Beträge der Differenzen als Zielfunktion gebildet wird. Diese Summe entspricht der Fläche zwischen der Kurve der gemessenen Regelgrößenwerte und der berechneten Werte. Es werden die Parameter n, T ermittelt, bei denen die Zielfunktion ein Minimum ist. Als Zielfunktion können auch andere Funktionen, welche die Abweichung zwischen zwei Kurven angeben, z. B. die Summe der Quadrate der Abweichungen, verwendet werden. Vorteilhaft sind die Differenzen unterschiedlich gewichtet, so daß in ausgewählten Teilen eines Einschwingvorganges eine besonders gute Annäherung erzielt wird. Ein solcher Teil ist der Beginn des Einschwingvorganges.

Figur 2 veranschaulicht den Suchvorgang für die Parameter T und n. Zweckmäßig ist es, möglichst gute Startwerte für die Parameter zur Verfügung zu stellen, damit nur wenige Zielfunktionsauswertungen gemacht werden müssen. Im allgemeinen wird mit der Ordnung n = 1 begonnen. Im Falle der erstmaligen Adaption wird ein grober Näherungswert für die zugehörige Zeitkonstante T aus der Annahme erhalten, daß der zum letzten der Speicherwerte gehörende Zeitwert größenordnungsmäßig die Einschwingzeit der Regelstrecke darstellt und daß der Parameter T ein Fünftel dieser Zeit ist. Wurden schon Adaptionen durchgeführt, dann wird für die zur Ordnung n = 1 gehörende Zeitkonstante das Produkt $n_{alt} \cdot T_{alt}$ verwendet. Eine eventuelle Ungenauigkeit des Startwertes von T ist für die Optimierung unkritisch, da stets ein stabiles Modell simuliert wird. Für die erforderliche Verbesserung der Parameter braucht die numerische Optimierung lediglich eine größere Zahl von Schritten.

Das schon oben kurz erwähnte Parameter-Suchverfahren dient der Minimierung der genannten Zielfunktion ZF (n, T) bezüglich einer gegebenen Anzahl von reellwertigen Parametern, wobei der formelmäßige Zusammenhang nicht notwendigerweise explizit angegeben werden muß. Um den Wert der Zielfunktion ZF (n, T) schrittweise zu verringern, sucht man, ausgehend von einem Startwert der Zielfunktion, durch gezielte Änderung der Parameter in der Umgebung des Startwertes nach einem geringeren Wert der Zielfunktion. Dieser Prozeß wird so lange fortgesetzt, bis auch bei sehr kleinen Parameteränderungen eine Verringerung der Zielfunktion nicht mehr gelingt. Die Variation der Parameter und die Berechnung des zugehörenden Werts der Zielfunktion werden parameterweise in Form eindimensionaler Minimumsuchen vorgenommen. Ein Suchzyklus wird dann noch durch eine Suche in Erfolgsrichtung, das ist die Richtung, die der Vektorsumme der einzelnen erfolgreichen Parameter-Suchrichtungen entspricht, abgeschlossen.

Der Parameter, in dessen Richtung die Suche erfolgt, wird um eine vom Programm gesteuerte Schrittweite verändert. Mit diesem neuen und den restlichen Parametern wird der aktuelle Zielfunktionswert berechnet. Ist dieser Wert kleiner als der bisher kleinste gefundene Zielfunktionswert, war der Suchschritt erfolgreich. Deshalb wird die Schrittweite verdoppelt, und es wird in der gleichen Parameterrichtung weitergesucht. Andernfalls, bei einem Mißerfolg, wird je nach Vorgeschichte, z. B., wenn der letzte Suchlauf erfolgreich war oder wenn die Suchrichtung bereits umgekehrt oder die Schrittweite bereits halbiert wurde, entweder die Suchrichtung umgekehrt, die Schrittweite halbiert oder die Suche abgebrochen und in Richtung des nächsten Parameters bzw. in Erfolgsrichtung weitergesucht, bis ein Minimum mit hinreichender Genauigkeit gefunden ist. Entscheidend für die Erkennung des Minimums sind diverse Abbruchkriterien, die sowohl für die Beendigung erfolgloser Suchen sorgen, als auch nach Abbruch in allen Parameterrichtungen oder nach Erreichen einer maximal zulässigen Anzahl von Zielfunktionsauswertungen den Abbruch herbeiführen.

Die Ordnung n und die Zeitkonstante T eines Verzögerungsgliedes n-ter Ordnung mit gleichen Zeitkonstanten sind nach der Berechnung der Verstärkung K die noch zu optimierenden Parameter. Da n ein ganzzahliger Parameter ist, wird die Zeitkonstante T nacheinander für n = 1 bis n = 8 optimiert. Es werden dann, wie in Figur 2 veranschaulicht, acht Kurven erhalten mit je einem Minimum, aus dem dann durch Vergleich das Gesamtminimum gesucht wird. Im Beispiel nach Figur 2 ist dies die Ordnung n = 3 und die Zeitkonstante $T_{opt}$.

Nachdem die Einheit ZF die Parameter der Regelstrecke RS bestimmt hat, werden diese durch Umlegen eines Schalters S2 einer Regler-Entwurfseinheit RE zugeführt. Diese berechnet aus den Streckenparametern die Reglerparameter, z. B. nach dem Verfahren des Betragsoptimums. Für ideale PID-Regler mit der Übertragungsfunktion

$$R(s) = k_p \cdot (1 + \frac{1}{s \cdot T_N} + s \cdot T_v)$$

lauten die Einstellregeln:

$$K_p = \frac{1}{16\,K} \cdot \frac{7\,n + 17}{n - 2}$$

$$T_N = \frac{T}{15}\,(7\,n + 16)$$

$$T_v = T \cdot \frac{n^2 + 4\,n + 3}{7\,n + 16}.$$

Beim realen PID-Regler

$$R(s) = K_p\,(1 + \frac{1}{s\,T_N} + \frac{s\,T_v}{1 + s\,T_v/V})$$

wird zusätzlich die Vorhaltverstärkung auf den Wert

V = 5

gesetzt. Vom Betragsoptimum werden ersichtlich nicht die Fälle n = 1 und n = 2 abgedeckt. Im Falle n = 2 wird die Verstärkung für die Ordnung n = 3 berechnet. Auf einen PI-Regler beschränkt man sich bei der Ordnung n = 1 auf die Verstärkung $K_p$ = 1,5/K, $T_N$ = T und $T_v$ = 0.

Da nach dem Betragsoptimum entworfene Regelkreise erfahrungsgemäß ein Überschwingen der Regelgröße aufweisen, ist beim Ausführungsbeispiel die Einstellregel für die Verstärkung zweckmäßig herabgesetzt, und zwar um den Faktor 0,6.

Bei Beschränkung auf einen PI-Regler mit der Übertragungsfunktion

$$R(s) = K_p \cdot (1 + \frac{1}{s \cdot T_N})$$

liefert das Betragsoptimum die Einstellregeln

$$K_p = \frac{1}{4\,k} \cdot \frac{n + 2}{n - 1}$$

$$T_N = \frac{T}{3} \cdot (n + 2).$$

Vorteilhaft wird ein Adaptionsvorgang abgebrochen, wenn Reglerschwingungen erkannt werden. in diesem Falle werden gesonderte Modifikationen der Reglerparameter durchgeführt, z. B. die Verstärkung herabgesetzt, um die Schwingung zu unterbinden. Eine Adaption könnte der so durchgeführten Stabilisierung entgegenwirken und diese unwirksam machen.

Nachdem die Reglerparameter berechnet sind, müssen diese noch in den Regler übernommen werden; erst dann ist ein Adaptionszyklus abgeschlossen. Eine solche Veränderung der Reglerparameter muß stoßfrei erfolgen, ähnlich wie die Betriebsartenumschaltung "Hand-Automatik". Es wird daher vorteilhaft der Regler mit den neuen Parametern vorübergehend, z. B. eine Abtastperiode lang, auf Handbetrieb umgeschaltet. Dadurch wird wegen der im Automatikbetrieb vorgenommenen Handwert-Nachführung erreicht, daß der letzte Stellgrößenwert beibehalten wird und die Umschaltung stoßfrei erfolgt.

Bei einem digitalen Regler wird während jeder Abtastperiode der Regelalgorithmus einschließlich der Ein- und Ausgabe der Prozeßsignale bearbeitet, es wird eine Bedienfunktion ausgeführt, mit der anwenderseitig eingegebene Parameter verarbeitet werden, und es werden ferner die Anzeigen aktualisiert. Ein adaptiver Regler nach dem Ausführungsbeispiel erfordert die Integration einer weiteren und zudem sehr rechenzeitintensiven Funktion, deren Bearbeitung zweckmäßig auf mehrere Abtastperioden verteilt wird. Vor allem bei hohen Abtastraten können Zeitprobleme auftreten, die den Einsatz eines gesonderten Prozessors erforderlich machen.

Als Ausführungsbeispiel wurde ein PID-Regler bzw. PI-Regler beschrieben, da derartige Regler den funktionellen Kern aller gängigen Kompaktregler bilden. Ferner wurde ein Verzögerungsglied n-ter Ordnung mit gleichen Zeitkonstanten als Regelstrecke angenommen, da in den meisten Anwendungsfällen diese Annahme zutrifft. Selbstverständlich kann die Erfindung auch bei Annahme anderer Regelstrecken und bei Verwendung anderer Regler angewandt werden. Ein Vorteil des neuen adaptiven Reglers ist, daß die Adaption mit einer definierten Anregung gestartet wird. Weiter wirkt sich günstig aus, daß nicht der gesamte Regelkreis, sondern lediglich das stabile Streckenmodell simuliert wird. Da die Eingangsgröße für die Simulation der real auftretende Stellgrößenverlauf ist, werden etwaige Begrenzungseffekte und nichtideale Anregungen berücksichtigt.

**Patentansprüche**

1. Adaptives Regelverfahren, bei dem die Regelstrecke identifiziert wird, indem der Verlauf der Regelgröße (x) und der Stellgröße (y) als eine Folge von Wertepaaren erfaßt wird, die Verstärkung der Regelstrecke aus den Differenzen der Anfangs- und Endwerte der Regel- und Stellgröße durch Division errechnet wird, die Werte der Stellgröße (y) in ein mathematisches Regelstreckenmodell (MD) eingegeben werden, errechnete Werte mit den gemessenen Werten der Regelgröße (x) verglichen werden und die Parameter (n, T) des Regelstreckenmodells (MD) gesucht werden, mit denen die Abweichung zwischen den gemessenen Werten der Regelgröße (x) und den errechneten Werten ein Minimum ist, und bei dem aufgrund dieser Parameter die Parameter des Reglers (RG) bestimmt und in diesen eingegeben werden, **dadurch gekennzeichnet**, daß

   a) das Verfahren bei geschlossenem Regelkreis (RG, S1, RS) durchgeführt wird,
   b) ein stationärer Zustand des Reglers (RG) festgestellt wird,
   c) der Verlauf der Regelgröße (x) und der Stellgröße (y) bei Änderung des Sollwertes des Reglers (RG) zwischen einem stationären Anfangswert und einem stationären Endwert erfaßt wird,
   d) parameterweise die gemessenen Regelgrößen (x) und die in einem Modell berechneten Regelgrößen verglichen und die Summe der Vergleichsergebnisse als Zielfunktion (ZF(n, T)) gebildet wird, wobei die Parameter des Modells (MD) nacheinander in Form einer eindimensionalen Minimumsuche schrittweise so verändert werden, daß die Zielfunktion (ZF(n, T)) verkleinert wird, bis bei einer minimalen Schrittweite eine Verkleinerung nicht mehr möglich ist,
   e) die Regelstrecke (RS) mit den Parametern identifiziert ist, bei denen die Zielfunktion (ZF(n, T)) ein Minimum ist.

2. Verfahren nach Anspruch 1, **dadurch gekennzeichnet**, daß ausgehend von Startwerten der Parameter ein Parameter (T) unter Beibehaltung der restlichen Parameter n um programmgesteuerte Schrittweiten in derselben Richtung verändert wird, bis die Zielfunktion (ZF(n, T)) ansteigt und daß dann die Richtung der Parameteränderung umgekehrt und die Schrittweite halbiert wird.

3. Verfahren nach Anspruch 1 oder 2, **dadurch gekennzeichnet**, daß als mathematisches Modell ein Verzögerungsglied n-ter Ordnung mit gleichen Zeitkonstanten verwendet wird und daß nacheinander für die Ordnungszahlen n = 1 ... 8 die Zeitkonstanten (T) bestimmt werden, bei denen die Zielfunktion (ZF(n, T)) ein Minimum ist, und daß aufgrund der Parameter, die das kleinste Minimum ergeben, die Parameter des Reglers bestimmt werden.

4. Verfahren nach Anspruch 1-3, **dadurch gekennzeichnet**, daß der Verlauf von Regel- und Stellgröße zwischen einem stationären Anfangszustand und einem stationären Endzustand als vorgegebene Maximalzahl von Wertepaaren mit Hilfe eines zyklisch Daten komprimierenden Verfahrens gespeichert wird und ein Adaptionsvorgang eingeleitet wird, wenn anschließend an einen stationären Zustand im Automatikbetrieb des Reglers der Sollwert und im Handbetrieb die Stellgröße sich um mehr als einen vorgegebenen Betrag ändert.

5. Verfahren nach einem der Ansprüche 1 bis 4, **dadurch gekennzeichnet**, daß ein stationärer Zustand dann angenommen wird, wenn die Abweichung der Regelgröße von ihrem Sollwert während einer signalabhängig festgelegten Zeitspanne einen vorgegebenen Wert nicht übersteigt.

6. Verfahren nach einem der Ansprüche 1 bis 5, **dadurch gekennzeichnet**, daß ein Zähler bei jedem Wert der Regelgröße, der um weniger als einen vorgegebenen Betrag vom Sollwert abweicht, inkrementiert wird und auf Null zurückgesetzt wird, wenn ein Wert auftritt, der größer oder gleich dem vorgegebenen Betrag ist, und die Regelgröße als stationär angesehen wird, wenn sie während mindestens einer Zeit, die etwa gleich ein Fünftel der in einem früheren Adaptionsvorgang ermittelten Einschwingzeit des Prozeßmodells ist, um nicht mehr als den vorgegebenen Betrag vom Sollwert abweicht.

7. Verfahren nach Anspruch 5, **dadurch gekennzeichnet**, daß die Mindestzeit $(0,4\ n + 0,6) \cdot T$ ist.

8. Verfahren nach Anspruch 5, **dadurch gekennzeichnet**, daß für jeden Abtastwert $x_k$ der Abtastwert $x_j$ bestimmt wird, der von allen Abtastwerten zum erstenmal den Wert $x_k - c \mid x_k - x_1 \mid$ überschritten hat, und daß das Abspeichern beendet wird, wenn $k > a\ j$ ist, wobei $a > 1$ ist.

9. Verfahren nach Anspruch 8, **dadurch gekennzeichnet**, daß $c < 0,1$, vorzugsweise $0,05$ ist.

**10.** Verfahren nach Anspruch 8 oder 9, **dadurch gekennzeichnet**, daß a etwa 2 ist.

**11.** Verfahren nach Anspruch 5, **dadurch gekennzeichnet**, daß ein stationärer Zustand angenommen wird, wenn die Differenz zwischen dem Sollwert und dem aus einer bestimmten Anzahl von Abtastwerten gebildeten Mittelwert einen vorgegebenen Wert nicht übersteigt.

**12.** Verfahren nach einem der Ansprüche 1 bis 11, **dadurch gekennzeichnet**, daß das Speichern der Wertepaare beendet wird, wenn im Verlauf der Regeldifferenz eine vorgegebene Anzahl von Vorzeichenwechseln aufeinander folgen und die Regeldifferenz zwischen den beiden letzten oder mehr Vorzeichenwechseln einen vorgegebenen Betrag nicht überschritten hat.

**13.** Verfahren nach einem der Ansprüche 1 bis 12, **dadurch gekennzeichnet**, daß bei einem PID-Regler und einem Verzögerungsglied n-ter Ordnung mit gleichen Zeitkonstanten als Streckenmodell mit den Parametern K, n, T die Reglerparameter $K_p$, $T_N$, $T_v$ auf folgende Werte eingestellt werden:

$$K_p = \frac{1}{16\,K} \cdot \frac{7\,n + 16}{n - 2}$$

$$T_N = \frac{T}{15}\,(7\,n + 16)$$

$$T_v = T \cdot \frac{n^2 + 4\,n + 3}{7\,n + 16}.$$

**14.** Verfahren nach Anspruch 13, **dadurch gekennzeichnet**, daß die Vorhaltverstärkung des Reglers auf den Wert V = 5 eingestellt ist.

**15.** Verfahren nach Anspruch 13 oder 14, **dadurch gekennzeichnet**, daß im Falle der Ordnung n = 1 die Reglerverstärkung auf den Wert 1,5/K eingestellt wird.

**16.** Verfahren nach einem der Ansprüche 13 bis 15, **dadurch gekennzeichnet**, daß im Falle der Ordnung n = 2 die Reglerverstärkung auf einen Wert zwischen 2/K bis 2,5/K eingestellt wird.

**17.** Verfahren nach einem der Ansprüche 1 bis 16, **dadurch gekennzeichnet**, daß im Falle eines PI-Reglers dessen Parameter $K_p$ und $T_N$ auf die Werte

$$K_p = \frac{1}{4\,K} \cdot \frac{n + 2}{n - 1}$$

$$T_N = \frac{T}{3} \cdot (n + 2),$$

eingestellt werden.

**18.** Verfahren nach Anspruch 17, **dadurch gekennzeichnet**, daß im Falle der Ordnung n = 1 die Reglerverstärkung auf etwa 1,5/K eingestellt wird.

## Claims

**1.** Adaptive control method in which the controlled system is identified by acquiring the characteristic of the controlled variable (x) and the manipulated variable (y) as a sequence of value pairs, calculating by division the gain of the controlled system from the differences between the initial value and the final value of the controlled variable and of the manipulated variable, entering the values of the manipulated variable (y) in a mathematical controlled system model (MD), comparing calculated values with the measured values of the controlled variable (x) and searching for the parameters (n, T) of the controlled system model (MD), at which parameters the deviation between the measured values of the controlled variable (x) and the calculated values is a minimum, and in which adaptive control method, on the basis of these parameters, the parameters of the controller (RG) are determined and are entered therein, characterised in that

(a) the method is carried out with a closed control loop (RG, S1, RS),

(b) a stationary state of the controller (RG) is established,

(c) the characteristic of the controlled variable (x) and the manipulated variable (y) is acquired upon a change in the desired value of the controller (RG) between a stationary initial value and a stationary final value,

(d) the measured controlled variables (x) and the controlled variables calculated in a model are compared parameter-wise and the sum of the results of the comparison is formed as a target function (ZF(n, T)), wherein the parameters of the model (MD) are successively altered step-wise in the form of a one-dimensional minimum search, in such a way that the target function (ZF(n, T)) is reduced until, at a minimum step width, no further reduction is possible,

(e) the controlled system (RS) is identified with the parameters at which the target function (ZF(n, T)) is a minimum.

2. Method according to claim 1, characterised in that, starting from starting values of the parameters, one parameter (T) is altered in the same direction by programme-controlled step widths, while the remaining parameters n are retained, until the target function (ZF(n, T)) rises, and in that the direction of the parameter change is then reversed and the step width is halved.

3. Method according to claim 1 or 2, characterised in that an nth order time-delay element with equal time constants is used as the mathematical model and in that there are successively determined for the ordinal numbers n = 1 ... 8 the time constants (T) at which the target function (ZF(n, T)) is a minimum and in that, on the basis of the parameters which result in the smallest minimum, the parameters of the controller are determined.

4. Method according to claim 1, characterised in that the characteristic of the controlled variable and the manipulated variable between a stationary initial state and a stationary final state is stored as a pre-selected, maximum number of value pairs with the aid of a method for compressing data cyclically, and an adaptation process is initiated when, following a stationary state, the desired value changes by more than a pre-selected absolute value during automatic operation of the controller and the manipulated variable changes by more than a pre-selected absolute value during manual operation.

5. Method according to one of claims 1 to 4, characterised in that a stationary state is assumed when the deviation of the controlled variable from its desired value does not rise above a pre-selected value during a time duration established in dependence upon the signal.

6. Method according to one of claims 1 to 5, characterised in that a counter is incremented at each value of the controlled variable that deviates from the desired value by less than a pre-selected absolute value and is reset to zero when there occurs a value which is greater than or equal to the pre-selected absolute value, and the controlled variable is considered stationary when it deviates from the desired value by not more than the pre-selected absolute value at least during a time which is approximately equal to a fifth of the settling time of the process model, which settling time is determined in an earlier adaptation process.

7. Method according to claim 5, characterised in that the minimum time is $(0.4\,n + 0.6)\cdot T$.

8. Method according to claim 5, characterised in that, for each sampling value $x_k$, there is determined the sampling value $x_j$ which was the first of all of the sampling values to exceed the value $x_k - c \mid x_k - x_1 \mid$, and in that storing is complete when $k > a\,j$, wherein $a > 1$.

9. Method according to claim 8, characterised in that $c < 0.1$, preferably 0.05.

10. Method according to claim 8 or 9, characterised in that $a$ is approximately 2.

11. Method according to claim 5, characterised in that a stationary state is assumed when the difference between the desired value and the mean value formed from a pre-determined number of sampling values does not rise above a pre-selected value.

12. Method according to one of claims 1 to 11, characterised in that storing of the value pairs is ended when, in the characteristic of the system deviation, a pre-selected number of changes of sign follow each other and the system deviation between the last two or more changes of sign has not exceeded a pre-selected absolute value.

13. Method according to one of claims 1 to 12, characterised in that, with a PID controller and an nth order time-delay element with equal time constants as a system model having the parameters K, n, T, the controller parameters $K_p$, $T_N$, $T_v$ are set at the following values:

$$K_p = \frac{1}{16\,K} \cdot \frac{7\,n\,+\,17}{n\,-\,2}$$

$$T_N = \frac{T}{15}\,(7\,n\,+\,16)$$

$$T_v = T \cdot \frac{n^2\,+\,4\,n\,+\,3}{7\,n\,+\,16}\,.$$

**14.** Method according to claim 13, characterised in that the derivative action gain of the controller is set at the value V = 5.

**15.** Method according to claim 13 or 14, characterised in that, in the case of the order n = 1, the controller gain is set at the value 1.5/K.

**16.** Method according to one of claims 13 to 15, characterised in that, in the case of the order n = 2, the controller gain is set at a value between 2/K and 2.5/K.

**17.** Method according to one of claims 1 to 16, characterised in that, in the case of a PI controller, its parameters $K_p$ and $T_N$ are set at the following values:

$$K_p = \frac{1}{4\,K} \cdot \frac{n\,+\,2}{n\,-\,1}$$

$$T_N = \frac{T}{3} \cdot (n\,+\,2).$$

**18.** Method according to claim 17, characterised in that, in the case of the order n = 1, the controller gain is set at approximately 1.5/K.

**Revendications**

**1.** Procédé de réglage adaptatif, selon lequel on identifie le système réglé en détectant la courbe de la grandeur réglée (x) et de la grandeur de régulation (y) sous la forme d'une suite de couples de valeurs, on calcule par division, l'amplification du système réglé à partir des différences des valeurs initiale et finale de la grandeur réglée et de la grandeur de régulation, on introduit les valeurs de la grandeur de régulation (y) dans un modèle mathématique (MD) du système réglé, on compare des valeurs calculées aux valeurs mesurées de la grandeur réglée (x) et on recherche les paramètres (n, T) du modèle (MD) du système réglé, pour lesquels l'écart entre les valeurs mesurées de la grandeur réglée (x) et les valeurs calculées est minimum, et selon lequel on détermine, sur la base de ces paramètres, les paramètres d'un régulateur (RG) et on les introduit dans ce dernier, caractérisé par le fait
a) on met en oeuvre le procédé dans une boucle de régulation fermé (RG, S1, RS),
b) on détermine un état stationnaire du régulateur (RG),
c) on détecte la courbe de la grandeur réglée (x) et de la grandeur de régulation (y) lors d'une variation de la valeur de consigne du régulateur (RG) entre une valeur initiale stationnaire et une valeur finale stationnaire,
d) au moyen des paramètres, on compare les grandeurs réglées mesurées (x) et les grandeurs réglées calculées dans un modèle et on forme la somme des résultats de comparaison sous la forme d'une fonction cible (ZF(n,T)), les paramètres du modèle (MD) étant modifiés pas-à-pas successivement sous la forme d'une recherche unidimensionnelle du minimum de sorte que la fonction cible (ZF(n,T)) soit réduite jusqu'à ce qu'une réduction ne soit plus possible pour une largeur de pas minimale,
e) le système réglé (RS) est identifié par les paramètres, pour lesquels la fonction cible (ZF(n,T)) est minimale.

**2.** Procédé suivant la revendication 1, caractérisé par le fait qu'à partir de valeurs initiales des paramètres tout en conservant les autres paramètres n, on modifie de largeurs de pas commandées par le programme dans le même sens un paramètre T, jusqu'à ce que la fonction cible (ZF(n,T)) augmente, on inverse ensuite le sens de la variation du paramètre et on divise par deux la largeur des pas.

**3.** Procédé suivant la revendication 1 ou 2, caractérisé par le fait qu'on utilise comme modèle mathématique un circuit de retardement d'ordre n ayant des constantes de temps identiques et qu'on détermine successivement, pour les nombres ordinaux n = 1 à 8, les constantes de temps (T), pour lesquelles la fonction cible (ZF(n,T)) est minimale et que, sur la base des paramètres, qui fournissent le plus petit minimum, on détermine les paramètres du régulateur.

4. Procédé suivant l'une des revendications 1 à 3, caractérisé par le fait qu'on mémorise la courbe de la grandeur réglée et de la grandeur de régulation entre un état initial stationnaire et un état final stationnaire, sous la forme d'un nombre maximum prédéterminé de paires de valeurs à l'aide d'un procédé réalisant une compression cyclique de données, et qu'on déclenche un processus d'adaptation lorsqu'à la suite d'un état stationnaire, lors du fonctionnement automatique du régulateur la valeur de consigne varie de plus d'une valeur absolue prescrit et, dans le fonctionnement manuel, la grandeur de régulation varie de plus d'une valeur absolue prescrite.

5. Procédé suivant l'une des revendications 1 à 4, caractérisé par le fait qu'on suppose l'existence d'un état stationnaire lorsque l'écart entre la grandeur réglée et sa valeur de consigne ne dépasse pas une valeur prescrite pendant un laps de temps fixé en fonction d'un signal.

6. Procédé suivant l'une des revendications 1 à 5, caractérisé par le fait que l'on incrémente un compteur pour chaque valeur de la grandeur réglée, qui diffère de moins d'une valeur absolue prédéterminée par rapport à la valeur de consigne, et on le ramène à zéro lorsqu'apparaît une valeur qui est supérieure ou égale à la valeur prescrite, et on considère la grandeur réglée comme stationnaire lorsqu'elle ne diffère pas de plus de la valeur absolue prescrite par rapport à la valeur de consigne, pendant au moins un laps de temps, qui est égal approximativement au cinquième du temps d'établissement du modèle de processus, déterminé pendant une opération antérieure d'adaptation.

7. Procédé suivant la revendication 5, caractérisé par le fait que le laps de temps minimal est $(0,4\,n + 0,6).T$.

8. Procédé suivant la revendication 5, caractérisé par le fait que pour chaque valeur d'échantillonnage $x_k$, on détermine la valeur d'échantillonnage $x_j$, qui, parmi toutes les valeurs d'échantillonnage, a dépassé pour la première fois la valeur $x_k - c\,|\,x_k - x_1\,|$, et qu'on arrête la mémorisation lorsque l'on a $k > a\,j$, avec $a > 1$.

9. Procédé suivant la revendication 8, caractérisé par le fait que l'on a $c < 0,1$ et de préférence $0,05$.

10. Procédé suivant la revendication 8 ou 9, caractérisé par le fait que a est égal approximativement à 2.

11. Procédé suivant la revendication 5, caractérisé par le fait qu'on suppose l'existence d'un état stationnaire lorsque la différence entre la valeur de consigne et la valeur moyenne formée à partir d'un nombre déterminé de valeurs d'échantillonnage ne dépasse pas une valeur prescrite.

12. Procédé suivant la revendication 1 à 11, caractérisé par le fait qu'on arrête la mémorisation de couples de valeur lorsque, dans la courbe de la différence de régulation, un nombre prescrite de changements de signe se suivent et que la différence de régulation entre les deux derniers changements de signe ou plus n'a pas dépassé une valeur absolue prescrite.

13. Procédé suivant l'une des revendications 1 à 12, caractérisé par le fait que dans le cas d'un régulateur PID et d'un circuit de retardement d'ordre n ayant les mêmes constantes de temps que le modèle de systéme commandé ayant les paramètres K, n, T, on règle les paramètres $K_p$, $T_N$, $T_v$ du régulateur sur les valeurs suivantes

$$K_p = \frac{1}{16\,K} \cdot \frac{7\,n + 16}{n - 2}$$

$$T_N = \frac{T}{15}\,(7\,n + 16)$$

$$T_v = T \cdot \frac{n^2 + 4\,n + 3}{7\,n + 16}.$$

14. Procédé suivant la revendication 13, caractérisé par le fait que l'amplification de dosage de dérivation du régulateur est réglée sur la valeur $V = 5$.

15. Procédé suivant la revendication 13 ou 14, caractérisé par le fait que dans le cas de l'ordre $n = 1$, on règle l'amplification du régulateur sur la valeur $1,5/K$.

**16.** Procédé suivant l'une des revendications 13 à 15, caractérisé par le fait que dans le cas de l'ordre n = 2, on règle l'amplification du régulateur sur une valeur comprise entre 2/K et 2,5/K.

**17.** Procédé suivant l'une des revendications 1 à 16, caractérisé par le fait que dans le cas d'un régulateur PI, on règle ses paramètres $K_p$ et $T_N$ sur les valeurs

$$K_p = \frac{1}{4\,K} \cdot \frac{n+2}{n-1}$$

$$T_N = \frac{T}{3} \cdot (n+2)$$

**18.** Procédé suivant la revendication 17, caractérisé par le fait que dans le cas de l'ordre n = 1, on règle l'amplification du régulateur sur approximativement 1,5/K.

# FIG 1

# FIG 2